# DEMANDE DE BREVET EUROPEEN

(11) **EP 4 574 895 A1**
(43) Date de publication de la demande: **25.06.2025**
(21) Numéro de dépôt: 24221171.2
(22) Date de dépôt: 18.12.2024
(51) Int. Cl.: C08L 23/16, F16L 11/04

(54) **COMPOSITION DE CAOUTCHOUC ET TUYAU L'INCORPORANT**

(30) Priorité: 19.12.2023 FR 2314522
(71) Demandeur: HUTCHINSON, 75008 Paris (FR)
(72) Inventeur: BIERCE-ARGY, Gwenaëlle, 45210 Ferrières en Gatinais (FR); HOUEE, Sandrine, 45200 Amilly (FR)
(74) Mandataire: Plasseraud IP

(57) **Abrégé**

L'invention concerne une composition de caoutchouc utilisable pour former à l'état réticulé au moins une couche d'un tuyau, et un tuyau dont au moins une couche est constituée de cette composition. L'invention s'applique à tout tuyau de transfert d'un fluide sous pression, de préférence à un tuyau multicouche pour véhicule automobile.

La composition de caoutchouc selon l'invention, à base d'au moins un élastomère, comprend une charge renforçante et un système de réticulation comprenant du soufre et/ou un peroxyde, la charge renforçante comprenant
au moins un noir de carbone recyclé issu d'un broyage et d'une décomposition thermique d'articles usagés à base de caoutchouc, et
une lignine fonctionnalisée sous forme de poudre.

## Description

### Domaine technique

L'invention concerne une composition de caoutchouc à base d'au moins un élastomère utilisable pour former à l'état réticulé au moins une couche d'un tuyau, et un tuyau dont au moins une couche est constituée de cette composition. L'invention s'applique à un tuyau monocouche ou multicouche pour véhiculer un fluide sous pression, de préférence un tuyau multicouche véhiculant un fluide à une pression égale ou supérieure à 2. 10⁵ Pa, le fluide pouvant être un liquide (e.g. de l'eau ou un liquide de refroidissement), un gaz ou un fluide supercritique (e.g. dans un circuit de climatisation), un mélange de gaz (e.g. de l'air dans un circuit d'admission d'air), ou un carburant. L'invention s'applique généralement à tout tuyau de transfert d'un fluide pour un moteur thermique, un moteur électrique ou pour une pile à combustible (e.g. à hydrogène) d'un véhicule automobile, ferroviaire, aquatique, aérien ou spatial, ainsi que pour toute installation industrielle ou d'habitation véhiculant un fluide sous pression.

### Technique antérieure

De manière connue, un tuyau en caoutchouc pour circuit de refroidissement de véhicule automobile comprend usuellement une couche interne conçue pour être en contact avec le liquide de refroidissement véhiculé, au moins une armature de renforcement surmontant la couche interne (typiquement une armature formée de fils tricotés, tressés ou guipés par exemple en PET, aramide ou rayonne), et une couche externe surmontant l'armature et exposée à l'air environnant le tuyau. Ces couches interne et externe sont typiquement constituées d'une composition de caoutchouc renforcée par une charge comprenant un noir de carbone d'origine fossile et de grade renforçant (i.e. noir de carbone conventionnel usuellement qualifié de « vierge », généralement obtenu par décomposition thermique ou combustion incomplète d'hydrocarbures), éventuellement couplé ou remplacé par une charge inorganique renforçante minérale, telle qu'une silice ou un kaolin, par exemple.

On a cherché ces dernières années à coupler un tel noir de carbone à une autre charge renforçante d'origine ni fossile, ni minérale, i.e. une charge biosourcée (issue de la biomasse), comme par exemple de la lignine, afin de réduire la part d'ingrédients fossiles ou minéraux dans la composition et en contrepartie d'augmenter la part d'ingrédients biosourcés. On peut notamment citer les documents de brevet suivants concernant des compositions de caoutchouc pour tuyaux comprenant une charge renforçante en partie biosourcée.

WO 2023/025808 A1 présente une composition de caoutchouc réticulée au peroxyde par exemple pour un tuyau, qui comprend :
- à ses exemples 1-2 : 150 parties en poids d'un caoutchouc EPDM, 70 pce d'une lignine « L1 » modifiée par traitement hydrothermique et 60 pce d'un noir de carbone vierge « N-550 », et
- à ses exemples 3-4 : 100 parties en poids d'un caoutchouc EPDM, 50 pce d'une lignine « L2 » modifiée par traitement hydrothermique et 50 pce du noir de carbone vierge « N-550 ».

EP 4 059 996 A1 présente une composition de caoutchouc réticulée au soufre par exemple pour un tuyau, qui comprend :
- à son exemple Ab : 100 parties en poids d'un caoutchouc nitrile-butadiène (NBR), 40 pce d'une lignine « HTC » modifiée par traitement hydrothermique et 20 pce d'un noir de carbone vierge « N550 »,
- à son exemple Bb : 100 parties en poids d'un caoutchouc polychloroprène (CR), 40 pce de la lignine « HTC » et 20 pce du noir de carbone vierge « N550 »,
- à son exemple Cb : 100 parties en poids d'un caoutchouc EPDM, 40 pce de la lignine « HTC » et 20 pce du noir de carbone vierge « N550 »,
- à son exemple Db : 100 parties en poids d'un caoutchouc naturel (NR), 40 pce de la lignine « HTC » et 20 pce du noir de carbone vierge « N550 »,
- à son exemple Es : 100 parties en poids d'un caoutchouc bromobutyl (BIIR), 5 pce de la lignine « HTC » et 55 pce d'un noir de carbone vierge « N660 », et
- à son exemple Eb : 100 parties en poids d'un caoutchouc bromobutyl (BIIR), 40 pce de la lignine « HTC » et 20 pce du noir de carbone vierge « N660 ».

Un inconvénient des compositions de caoutchouc testées dans ces exemples de WO 2023/025808 A1 et EP 4 059 996 A1, qui utilisent à titre de charge renforçante un noir de carbone vierge et une lignine modifiée, réside dans leur fraction massique durable réduite qui est d'au plus 22 % dans lesdits exemples.

### Exposé de l'invention

Un but de la présente invention est de proposer une composition de caoutchouc utilisable pour former à l'état réticulé au moins une couche d'un tuyau, la composition remédiant notamment à l'inconvénient précité de l'art antérieur, tout en présentant une aptitude à la mise en oeuvre à l'état réticulable et des propriétés à l'état réticulé qui soient toutes deux satisfaisantes pour ladite couche du tuyau.

Ce but est atteint en ce que la Demanderesse vient de découvrir que si l'on utilise dans une composition de caoutchouc réticulable au soufre ou au peroxyde, une charge renforçante mixte comprenant
- un noir de carbone recyclé issu d'un broyage et d'une décomposition thermique d'articles usagés à base de caoutchouc, et
- une lignine fonctionnalisée sous forme de poudre,
alors on peut obtenir au moins une couche d'un tuyau présentant, en comparaison d'une composition de caoutchouc « témoin » se différenciant uniquement de la composition de l'invention par l'utilisation d'un noir de carbone vierge (i.e. non recyclé) couplé à la même lignine fonctionnalisée :
- à l'état réticulable : une aptitude à la mise en oeuvre et une résistance au grillage qui sont globalement conservées, voire améliorées, et
- à l'état réticulé : des propriétés physiques et mécaniques qui sont sensiblement conservées, voire améliorées, et qui ne sont globalement pas plus pénalisées que la composition « témoin » suite à un vieillissement thermo-oxydant,
de sorte à conférer au tuyau des caractéristiques de mise en oeuvre et des propriétés en fonctionnement au moins équivalentes par rapport à un tuyau incorporant ladite composition « témoin ».

En d'autres termes, une composition de caoutchouc selon l'invention, qui est à base d'au moins un élastomère, est utilisable pour former à l'état réticulé au moins une couche d'un tuyau et comprend une charge renforçante et un système de réticulation comprenant du soufre et/ou un peroxyde, est telle que la charge renforçante comprend
au moins un noir de carbone recyclé issu d'un broyage et d'une décomposition thermique d'articles usagés à base de caoutchouc, et
une lignine fonctionnalisée sous forme de poudre.

Par « composition de caoutchouc à base d'au moins un élastomère, utilisable pour former à l'état réticulé au moins une couche d'un tuyau », on entend une composition de caoutchouc pour tuyau, à base d'au moins un élastomère.

Par l'expression « à base de », on entend dans la présente description que la composition ou l'ingrédient considéré comprend majoritairement en poids le constituant concerné, i.e. selon une fraction massique supérieure à 50 %, de préférence supérieure à 75 % et pouvant aller jusqu'à 100 %.

Par « au moins un noir de carbone recyclé issu d'un broyage et d'une décomposition thermique d'articles usagés à base de caoutchouc », on entend que ledit ou chaque noir de carbone recyclé (i.e. noir de carbone non vierge, appelé « recovered carbon black » en anglais) est essentiellement obtenu par broyage, puis par une décomposition à température élevée du broyat (telle qu'une pyrolyse, (vapo)thermolyse ou dévulcanisation) d'un article usagé réalisé en au moins un caoutchouc ou bien majoritairement constitué d'au moins un caoutchouc (tel qu'un pneumatique, un tuyau, un joint d'étanchéité, une courroie ou tout autre produit industriel caoutchouteux). Par « broyage » et par « broyat », on entend de manière générique dans la présente description respectivement un broyage éventuellement complété par un déchiquetage de l'article à base de caoutchouc usagé, et le produit des opérations successives de broyage et éventuellement de déchiquetage appliquées aux articles usagés.

Par « lignine fonctionnalisée », on entend dans la présente description une lignine carbonée, qu'elle soit modifiée par thermohydrolyse ou par un autre procédé de modification/ purification, permettant d'obtenir un extrait de lignine purifié. De manière connue, la lignine est un composant majeur de la biomasse lignocellulosique, constituée d'une macromolécule ramifiée de type polymère phénolique comportant notamment des groupes fonctionnels carbonyle (C=O), hydroxyle aliphatique et hydroxyle phénolique. La lignine fonctionnalisée utilisable dans l'invention peut présenter en particulier tout ou partie de ces groupes fonctionnels.

Selon des exemples de réalisation de l'invention, la lignine fonctionnalisée sous forme de poudre comprend :
- des particules dépourvues de groupe CO ou COO en surface, et/ou
- est une lignine kraft par exemple issue d'un bois d'arbres gymnospermes, tels que des conifères.

On notera que la combinaison dudit au moins un noir de carbone recyclé et de la lignine fonctionnalisée permet de conférer à la composition réticulée selon l'invention (tant au soufre qu'au peroxyde) des propriétés physiques (e.g. masse volumique, dureté, résistivité volumique) et des propriétés mécaniques (e.g. module sécant M100 à 100 % de déformation, allongement et contrainte à la rupture, déformation rémanente à la compression) qui sont chacune suffisantes pour que le tuyau selon l'invention, dont au moins une couche est constituée de cette composition, présente des caractéristiques de mise en oeuvre et des propriétés en fonctionnement (e.g. résistance à la pression, tenue dynamique et résistance au vieillissement) équivalentes à celles d'un tuyau incorporant ladite composition « témoin » (laquelle se différencie uniquement de la composition de l'invention, en ce que le noir de carbone couplé à la même lignine fonctionnalisée est vierge).

Avantageusement, ledit au moins un noir de carbone recyclé peut présenter des propriétés de renforcement de la composition analogues à celles d'un noir de carbone vierge de grade renforçant choisi parmi les séries ASTM N300, N400, N500, N600 et N700, par exemple analogues à celles d'un noir de carbone de série N500 ou N600 (e.g. analogues à celles d'un noir N550 ou N660, à titre non limitatif).

Selon un autre aspect de l'invention, la composition comprend, en plus dudit au moins un élastomère, du système de réticulation et de la lignine fonctionnalisée sous forme de poudre :
un mélange pulvérulent recyclé qui comprend le produit d'une réaction de décomposition thermique par thermolyse, pyrolyse ou dévulcanisation, appliquée à un broyat desdits articles usagés à base de caoutchouc,
le mélange pulvérulent recyclé comprenant ledit au moins un noir de carbone recyclé et étant par exemple micronisé, notamment dans le cas où ladite réaction est une thermolyse ou une pyrolyse.

Avantageusement, le mélange pulvérulent recyclé peut comprendre ledit au moins un noir de carbone recyclé selon une fraction massique comprise entre 80 % et 99 %, et des substances inorganiques selon une fraction massique comprise entre 1 % et 20 % comprenant en particulier des oxydes de silicium et/ou des composés de zinc, le mélange pulvérulent recyclé sous forme micronisée étant par exemple issu de la pyrolyse de pneumatiques usagés.

Par « charge renforçante », on entend dans la présente description une charge comprenant des charges individuelles de grades renforçants pour ledit au moins un élastomère qui sont dispersées de manière homogène dans la composition, étant précisé que la charge renforçante peut comprendre en outre :
- une charge organique renforçante autre que ledit au moins un noir de carbone recyclé, e.g. un noir de carbone vierge de grade identique ou différent par rapport à celui du noir de carbone recyclé, et/ou une autre charge carbonée (e.g. un graphite ou des nanotubes de carbone), et/ou
- une charge inorganique renforçante (e.g. une charge claire, telle qu'une silice) qui peut être d'origine minérale ou biosourcée.

Selon un mode préférentiel de réalisation de l'invention pouvant inclure l'une quelconque des caractéristiques précitées, la charge renforçante peut comprendre en outre au moins un noir de carbone vierge (i.e. non recyclé) présentant par exemple une surface spécifique BET mesurée selon la norme ASTM D 6556 qui est comprise entre 10 et 50 m²/g et par exemple de 15-30 m²/g, tel qu'un noir de carbone de série N500 ou N600 (e.g. N550 ou N660, à titre non limitatif).

Selon une autre caractéristique générale de l'invention pouvant inclure l'une quelconque des caractéristiques précitées, la composition peut comprendre 10-120 pce dudit au moins un noir de carbone recyclé et 2-90 pce de la lignine fonctionnalisée (pce : parties en poids pour 100 parties d'élastomère(s)).

On notera que l'incorporation de la lignine fonctionnalisée à la charge renforçante ne s'oppose pas à l'utilisation d'une quantité de noir de carbone élevée dans la composition, permettant de lui conférer des propriétés mécaniques satisfaisantes.

Selon une autre caractéristique générale de l'invention pouvant inclure l'une quelconque des caractéristiques précitées, ledit au moins un élastomère peut être choisi parmi les terpolymères éthylène-propylène-diène (EPDM), les copolymères isobutylène-isoprène (IIR), les copolymères isobutylène-isoprène halogénés (XIIR), les caoutchoucs silicones, les caoutchouc silicones fluorés, les caoutchoucs acryliques de type polyacrylates (ACM) et polyacrylates d'éthylène (AEM), et les copolymères bromés d'isobutylène-para-méthylstyrène. Selon un mode de réalisation, ledit au moins un élastomère peut être choisi parmi les terpolymères éthylène-propylène-diène (EPDM) et les caoutchoucs acryliques de type polyacrylates (ACM) et polyacrylates d'éthylène (AEM).

On notera toutefois que d'autres caoutchoucs que ceux précités sont utilisables dans la composition selon l'invention, en fonction des propriétés recherchées pour la ou chaque couche du tuyau.

Selon un mode particulier de réalisation de l'invention :
- ledit au moins un élastomère est constitué d'au moins un EPDM,
- le système de réticulation comprend un peroxyde ou du soufre, et
- la composition comprend 15-100 pce dudit au moins un noir de carbone recyclé et 5-80 pce de la lignine fonctionnalisée.

De préférence, ledit au moins un EPDM, non étendu à l'huile, présente :
- des taux massiques d'unités issues de l'éthylène de 52-70 %, d'un diène non conjugué (tel que l'éthylidène norbornène) de 4-7 %, et de préférence en outre
- une viscosité Mooney ML(1+4) à 125° C comprise entre 70 et 90.
On peut par exemple utiliser un mélange de deux EPDM non étendus à l'huile, dont l'un présente un taux massique d'unités issues de l'éthylène de 53-57 % et une viscosité Mooney ML(1+4) à 125° C comprise entre 75 et 85, et dont l'autre présente un taux massique d'unités issues de l'éthylène de 66-70 % et une viscosité Mooney ML(1+4) à 125° C comprise entre 80 et 90.

Selon un autre aspect général de l'invention pouvant se rapporter à l'une quelconque des caractéristiques précitées, la composition selon l'invention, par exemple à base d'au moins un EPDM, comprend :
- 10-80 pce dudit au moins un noir de carbone vierge, présentant par exemple une surface spécifique BET mesurée selon la norme ASTM D 6556 qui est comprise entre 10 et 50 m²/g,
- 10-80 pce, de préférence 15-80 pce, dudit au moins un noir de carbone recyclé, et
- 15-80 pce de ladite lignine fonctionnalisée,
avec la somme des quantités dudit au moins un noir de carbone vierge et dudit au moins un noir de carbone recyclé dans la composition qui est de 60-110 pce.

Encore plus préférentiellement, un autre aspect général de l'invention pouvant se rapporter à l'une quelconque des caractéristiques précitées, la somme des quantités dudit au moins un noir de carbone vierge et dudit au moins un noir de carbone recyclé dans la composition selon l'invention, par exemple à base d'au moins un EPDM, est de 70-100 pce, et
la somme des quantités dudit au moins un noir de carbone vierge, noir de carbone recyclé et de la lignine fonctionnalisée dans la composition est de 100-130 pce.

Également préférentiellement, la charge renforçante comprend :
- la lignine fonctionnalisée selon une fraction massique de 15-30 %, et
- ledit au moins un noir de carbone vierge et ledit au moins un noir de carbone recyclé selon une fraction massique totale de noir de carbone de 70-85 %.

Selon un autre aspect général de l'invention pouvant se rapporter à l'une quelconque des caractéristiques précitées, la composition selon l'invention, par exemple à base d'au moins un EPDM ou à base d'au moins un caoutchouc acrylique de type ACM ou AEM, présente avantageusement à l'état réticulé une résistivité volumique supérieure à 10⁶ Ohm.cm, de préférence à 10⁸ Ohm.cm et encore plus préférentiellement à 10¹² Ohm.cm, mesurée selon la norme IEC 62631 3.

On notera que ces compositions selon l'invention, par exemple à base d'au moins un EPDM ou à base d'au moins un caoutchouc acrylique de type ACM ou AEM, présentent ainsi une résistivité élevée grâce à ladite lignine fonctionnalisée, en dépit de l'utilisation d'une quantité élevée de noir de carbone qui est connue pour pénaliser cette résistivité (en augmentant la conductivité électrique). Cette résistivité élevée permet en particulier de minimiser la dégradation électrochimique de la couche interne du tuyau au contact du fluide qu'il véhicule, lorsque ce fluide est un liquide de refroidissement par exemple de type eau glycolée, sans pénaliser la résistance du tuyau à son environnement extérieur.

On notera également que l'utilisation d'un noir de carbone recyclé permet d'améliorer la résistivité par rapport à une composition comprenant un noir de carbone vierge.

On notera en outre que les quantités précitées utilisées pour ledit au moins un noir de carbone recyclé, la lignine fonctionnalisée et optionnellement ledit au moins un noir de carbone vierge, combinées à l'utilisation d'un système plastifiant adapté, permet de limiter la viscosité Mooney ML(1+4) à 100° C de la composition réticulable (quelle que soit la matrice élastomère utilisée) tout en s'opposant à sa réticulation prématurée (grillage), rendant ainsi la composition de l'invention apte à être mise en oeuvre par mélangeage puis extrusion.

A titre de système plastifiant de la composition selon l'invention, on peut utiliser au moins une huile plastifiante et/ou au moins une résine plastifiante, étant précisé que le système plastifiant selon l'invention comprend de préférence au moins une huile choisie parmi les huiles minérales, les huiles issues de la biomasse (incluant les huiles végétales modifiées ou non), et leurs mélanges.

A titre encore plus préférentiel, on utilise à titre de système plastifiant au moins une huile choisie parmi des huiles minérales paraffiniques, naphténiques et aromatiques, par exemple une huile minérale au moins en partie naphténique (pouvant comprendre à la fois des fractions paraffiniques, naphténiques et aromatiques).

Concernant ledit système de réticulation, il permet de réticuler chimiquement la composition de caoutchouc par cuisson ultérieure du tuyau comprenant la ou chaque couche constituée de la composition, à une température par exemple comprise entre 160 et 200° C. Ce système de réticulation, s'il est au peroxyde, peut comprendre un peroxyde organique et un co-agent de réticulation par exemple choisi parmi le triallyl cyanurate (TAC) et le triallyl isocyanurate (TAIC).

Selon un autre aspect général de l'invention pouvant se rapporter à l'une quelconque des caractéristiques précitées, la composition peut présenter une fraction massique d'ingrédients durables (i.e. biosourcé(s) et recyclé(s)), lesquels ingrédients durables incluent ledit au moins un noir de carbone recyclé et ladite lignine fonctionnalisée, qui est supérieure à 10%, de préférence supérieure à 20% ou 25 %, plus préférentiellement supérieure à 30 %, par exemple égale ou supérieure à 40 %.

On notera que lesdits ingrédients durables, présents dans la composition selon plus de 20 %, 25 %, 30 % voire 40 %, peuvent être constitués dudit au moins un noir de carbone recyclé et de ladite lignine fonctionnalisée, ou bien en variante inclure en outre un ou d'autres ingrédients durables.

Selon un autre aspect général de l'invention, les compositions de caoutchouc réticulables de l'invention sont préparées en mettant en oeuvre un procédé comprenant essentiellement les étapes successives suivantes :
a) introduction des ingrédients de la composition, à l'exception du système de réticulation, dans un mélangeur interne ;
b) travail thermomécanique en une étape dans ce mélangeur interne, jusqu'à atteindre une température maximale de "tombée" par exemple de 120-130° C ;
c) récupération puis refroidissement du mélange ainsi obtenu ; puis
d) ajout du système de réticulation au soufre ou au peroxyde dans un mélangeur externe (e.g. à cylindres) à une température de 95-105° C, avec travail mécanique dans ce mélangeur externe de la composition réticulable ainsi obtenue.

En variante, le système de réticulation peut être introduit lors de l'étape b) de travail thermomécanique avec un contrôle de la température maximum à 120°C par exemple, ou bien lors d'une deuxième introduction dans le mélangeur interne suite au refroidissement du mélange précurseur résultant de la première étape.

Comme l'attestent les résultats présentés dans les exemples ci-dessous, les propriétés physiques (e.g. masse volumique, dureté, résistivité volumique) et mécaniques (e.g. M100 à 100 % de déformation, allongement et contrainte à la rupture, déformation rémanente à la compression) des compositions réticulées selon l'invention sont globalement suffisantes pour que les tuyaux les incorporant véhiculent avec une bonne tenue dynamique un fluide à une pression d'au moins 2. 10⁵ Pa, même après un vieillissement thermo-oxydant à 150° C pendant 168 h.

Un tuyau selon un mode de réalisation de l'invention pour le transfert d'un fluide liquide, gazeux ou supercritique pour moteur thermique, électrique ou pour une pile à combustible d'un véhicule automobile, ferroviaire, aquatique, aérien ou spatial, le tuyau comprenant un tube radialement interne en caoutchouc, au moins une couche de renforcement et une couche de couverture en caoutchouc, est adapté pour véhiculer le fluide à une pression égale ou supérieure à 2. 10⁵ Pa.

Un tuyau selon ce mode de réalisation de l'invention est tel que l'un au moins du tube interne et de la couche de couverture est constitué d'une composition de caoutchouc à l'état réticulé telle que définie ci-dessus.

On notera que le tuyau selon ce mode de l'invention peut comprendre en outre une couche barrière en un matériau plastique, à base d'au moins un polymère thermoplastique. Cette couche barrière peut former la couche la plus radialement interne du tuyau, ou bien un « entrepli » entre le tube interne et une couche de renforcement ou entre le tube interne et une couche intermédiaire en caoutchouc.

Selon un autre aspect général de l'invention pouvant se rapporter à l'une quelconque des caractéristiques précitées, la composition de caoutchouc pour tuyau, à base d'au moins un élastomère, comprend une charge renforçante et un système de réticulation comprenant, de préférence, du soufre et/ou un peroxyde, dans laquelle la charge renforçante comprend :
(i) un mélange pulvérulent recyclé qui comprend le produit d'une réaction de décomposition thermique, par thermolyse, pyrolyse ou dévulcanisation, appliquée à un broyat d'articles usagés à base de caoutchouc,
   le mélange pulvérulent recyclé comprenant :
   au moins un noir de carbone recyclé selon une fraction massique comprise entre 80 % et 99 %, et
   des substances inorganiques selon une fraction massique comprise entre 1 % et 20 % comprenant des oxydes de silicium et/ou des composés de zinc ;
(ii) une lignine fonctionnalisée sous forme de poudre, et
(iii) éventuellement, au moins un noir de carbone vierge, présentant par exemple une surface spécifique BET mesurée selon la norme ASTM D 6556 qui est comprise entre 10 et 50 m²/g .

Selon un autre aspect général de l'invention pouvant se rapporter à l'une quelconque des caractéristiques précitées, le mélange pulvérulent recyclé est micronisé et comprend le produit d'une réaction de thermolyse ou pyrolyse appliquée à un broyat d'articles usagés à base de caoutchouc.

Selon un autre aspect général de l'invention pouvant se rapporter à l'une quelconque des caractéristiques précitées, le mélange pulvérulent recyclé est issu de la pyrolyse de pneumatiques usagés.

### Brève description des dessins

D'autres caractéristiques, avantages et détails de l'invention ressortiront à la lecture de la description suivante de plusieurs exemples de réalisation de l'invention, donnés à titre illustratif en relation avec les dessins joints, parmi lesquels :
**Fig. 1**

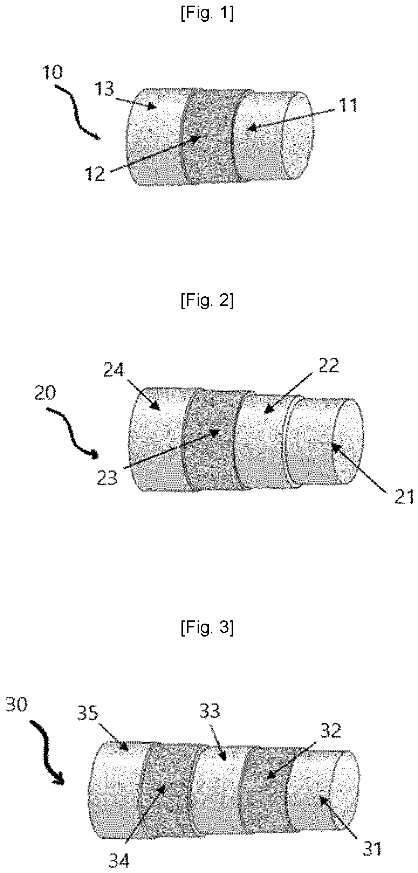

   [fig. 1] est une vue schématique latérale et en perspective avec arrachements partiels d'un tuyau multicouche selon un exemple de l'invention.
**Fig. 2**
   [fig. 2] est une vue schématique latérale et en perspective avec arrachements partiels d'un tuyau multicouche selon un autre exemple de l'invention.
**Fig. 3**
   [fig. 3] est une vue schématique latérale et en perspective avec arrachements partiels d'un tuyau multicouche selon un autre exemple de l'invention.
**Fig. 4**

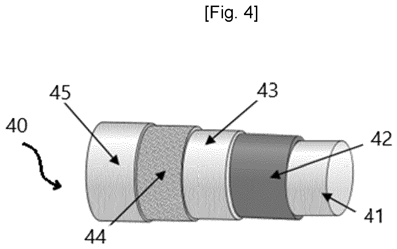

   [fig. 4] est une vue schématique latérale et en perspective avec arrachements partiels d'un tuyau multicouche selon un autre exemple de l'invention.

### Exemples de réalisation de l'invention

Le tuyau multicouche 10 de la figure 1 est apte à véhiculer tout fluide tel que ceux précités, à une pression de préférence égale ou supérieure à 2. 10⁵ Pa, et il comprend un tube radialement interne 11, une couche de renforcement 12 et une couche de couverture radialement externe 13, étant précisé que l'un au moins du tube 11 et de la couche de couverture 12 est constitué d'une composition de caoutchouc selon l'invention telle que définie ci-dessus, e.g. à base d'au moins un :
- EPDM, notamment dans le cas d'un tuyau véhiculant de l'eau ou un liquide de refroidissement pour moteur thermique, électrique ou pour une pile à combustible d'un véhicule automobile, ou
- ACM ou AEM (e.g. de type Vamac^{®}), notamment dans le cas d'un tuyau véhiculant de l'air (e.g. admission d'air de moteur de véhicule automobile).

Comme expliqué ci-dessus, le tube 11 et la couche de couverture 12 peuvent en variante être chacun à base d'au moins un IIR ou XIIR (caoutchouc butyl halogéné, e.g. chloré ou bromé), d'au moins un caoutchouc silicone optionnellement fluoré (e.g. MQ, PMQ, PVMQ, VMQ, ou FMQ, FVMQ) ou d'au moins un copolymère bromé d'isobutylène-para-méthylstyrène (e.g. de dénomination Exxpro^{®}).

La couche de renforcement 12 peut comprendre, à titre non limitatif, un tricot, tresse ou guipe à base de fils multifilamentaires réalisés en un ou plusieurs matériau(x) textile(s), par exemple en un polyamide (e.g. en aramide), polyester (e.g. en PET) ou en rayonne (le terme « fil » désignant de manière usuelle aussi bien un filé à base d'une multitude de filaments élémentaires de faible diamètre qui sont tordus ensemble, qu'un retors obtenu par torsion de plusieurs filés).

Le tuyau multicouche 20 de la figure 2 se distingue de celui de la figure 1, en ce que le tube interne 21 est surmonté d'une couche intermédiaire 22 elle-même surmontée d'une conche de renforcement 23 recouverte d'une couche de couverture 24, étant précisé que l'un au moins du tube 21 et de la couche de couverture 24 est constitué d'une composition selon l'invention.

Le tuyau multicouche 30 de la figure 3 se distingue de celui de la figure 2, en ce que le tube interne 31 est surmonté d'une couche de renforcement interne 32 elle-même surmontée d'une couche intermédiaire 33 recouverte d'une couche de renforcement externe 34 puis d'une couche de couverture 35, étant précisé que l'un au moins du tube 31, de la couche intermédiaire 33 et de la couche de couverture 35 est constitué d'une composition selon l'invention.

Le tuyau multicouche 40 de la figure 4 se distingue de celui de la figure 2, en ce que le tube interne 41 est surmonté d'une couche barrière 42 en matière plastique formant un entrepli, puis d'une couche intermédiaire 43 recouverte d'une couche de renforcement 44, elle-même surmontée d'une couche de couverture 45, étant précisé que l'un au moins du tube 41, de la couche intermédiaire 43 et de la couche de couverture 45 est constitué d'une composition selon l'invention.

On notera qu'un tuyau multicouche selon l'invention pourrait comprendre un arrangement de couches différant de ceux illustrés aux figures 1-4, tant par le nombre de ses couches que par leurs fonctions respectives.

### Préparation d'une composition témoin C1, de compositions non conformes à l'invention C2-C6 et de compositions selon l'invention 11-18 :

On a préparé la composition de caoutchouc témoin C1, les compositions de caoutchouc non conformes à l'invention C2-C6 et les compositions de caoutchouc selon l'invention 11-18, essentiellement en mettant en oeuvre le procédé suivant.

On a introduit les ingrédients de chaque composition, à l'exception du système de réticulation, dans un mélangeur interne de type Banbury^{®}. On a alors conduit un travail thermomécanique en une étape (durée du malaxage : 30 s à 2 min.), jusqu'à atteindre une température maximale de "tombée" d'environ 125° C. On a récupéré le mélange ainsi obtenu, on l'a refroidi, puis on a ajouté le système de réticulation dans un mélangeur externe à cylindres à 100° C, en mélangeant le tout pendant environ 2 min. dans une étape de travail mécanique.

On a ensuite façonné les compositions de caoutchouc réticulables C1-C6 et I1-I8 ainsi obtenues sous forme d'éprouvettes cylindriques pour procéder aux mesures de propriétés à l'état non réticulé (viscosité Mooney et temps de grillage), et sous forme d'éprouvettes de type haltères pour procéder aux mesures des propriétés mécaniques à l'état réticulé après cuisson de l'éprouvette à 180° C (dureté, module sécant M100 à 100 % de déformation et propriétés à la rupture).

On a mesuré, sur chaque éprouvette réticulable de type cylindrique, la viscosité Mooney ML(1+4) à 100° C suivant la norme ISO 289-1 et le temps de grillage t5 sans réticulation prématurée à 135° C selon la norme ISO 289-2.

On a en outre mesuré, sur chaque éprouvette réticulée de type haltère :
a) la masse volumique, selon la norme ISO 2781,
b) la dureté Shore A après 3 secondes selon la norme ISO 48-4,
c) le module sécant M100 en traction uni-axiale selon la norme ISO 37:2017,
d) la contrainte à la rupture et l'allongement à la rupture, en traction uni-axiale selon la norme ISO 37:2017,
e) la déformation rémanente à la compression :
   à 25 % : 72 h / 130° C après 30 min. selon la norme ISO 815-1 (méthode B), et
   à 25 % : après 72 h / 140° C (spécification « FCA » : Fiat Chrysler Automobiles) selon la norme ISO 1817, et
f) la résistivité volumique mesurée à 1000 V.

On a soumis chaque éprouvette constituée des compositions de caoutchouc C1-C6 et I1-I8 à un vieillissement thermo-oxydant sous air chaud pendant 168 h à 150° C, puis on a mesuré à nouveau les propriétés de dureté et de contrainte et allongement à la rupture comme spécifié en b) et d) ci-dessus.

Le tableau 1 suivant détaille les formulations des compositions C1-C3 et 11-I5 préparées comme indiqué ci-dessus.

**[Tableau 1]**

| | C1 | C2 | C3 | **I1** | **I2** | **I3** | **I4** | **I5** |
|---|---|---|---|---|---|---|---|---|
| EPDM 1 * | 60 | 60 | 60 | 60 | 60 | 60 | 60 | 60 |
| EPDM 2 * | 40 | 40 | 40 | 40 | 40 | 40 | 40 | 40 |
| Noir de carbone vierge * | 57,5 | 115 | | 38,3 | 19,2 | | 76,6 | 19,2 |
| Lignine * | 57,5 | | 115 | 38,3 | 76,6 | 57,5 | 19,2 | 19,2 |
| Noir de carbone recyclé * | | | | 38,3 | 19,2 | 57,5 | 19,2 | 76,6 |
| Plastifiant * | 40 | 40 | 40 | 40 | 40 | 40 | 40 | 40 |
| MgO | 5,7 | 5,7 | 5,7 | 5,7 | 5,7 | 5,7 | 5,7 | 5,7 |
| PEG 4000 | 1,9 | 1,9 | 1,9 | 1,9 | 1,9 | 1,9 | 1,9 | 1,9 |
| Agent mise en oeuvre * | 3 | 3 | 3 | 3 | 3 | 3 | 3 | 3 |
| Anti-oxydant quinoléine | 1 | 1 | 1 | 1 | 1 | 1 | 1 | 1 |
| Anti-oxydant imidazole | 1 | 1 | 1 | 1 | 1 | 1 | 1 | 1 |
| Co-agent TAC | 1 | 1 | 1 | 1 | 1 | 1 | 1 | 1 |
| Bis-peroxyde organique | 10,5 | 10,5 | 10,5 | 10,5 | 10,5 | 10,5 | 10,5 | 10,5 |
| TOTAL | 279,1 | 279,1 | 279,1 | 279,0 | 279,1 | 279,1 | 279,1 | 279,1 |
| fractions massiques en ingrédients durables | 20 % | 0% | 41 % | 27 % | 34 % | 41 % | 14 % | 34 % |

Le tableau 2 suivant détaille les formulations des compositions C4-C6 et I6-I8 préparées comme indiqué ci-dessus.

**[Tableau 2]**

| | C4 | C5 | C6 | **I6** | **I7** | **I8** |
|---|---|---|---|---|---|---|
| AEM 1 * | 68,3 | 68,3 | 68,3 | 68,3 | 68,3 | 68,3 |
| AEM 2 * | 31,3 | 31,3 | 31,3 | 31,3 | 31,3 | 31,3 |
| Plastifiant (ester) | 5,6 | 5,6 | 5,6 | 5,6 | 5,6 | 5,6 |
| Noir de carbone vierge * | | 60 | | 20 | 40 | 10 |
| Noir de carbone recyclé * | | | 60 | 20 | 10 | 40 |
| Lignine * | 60 | | | 20 | 10 | 10 |
| Agent -réticulant (carbamate) | 1,3 | 1,3 | 1,3 | 1,3 | 1,3 | 1,3 |
| Anti-oxydant aminé | 2 | 2 | 2 | 2 | 2 | 2 |
| Agent de mise en oeuvre (acide) | 1,5 | 1,5 | 1,5 | 1,5 | 1,5 | 1,5 |
| Retardateur (acide) | 1,5 | 1,5 | 1,5 | 1,5 | 1,5 | 1,5 |
| Agent de mise en oeuvre (acide) | 1 | 1 | 1 | 1 | 1 | 1 |
| Agent de mise en oeuvre (lubrifiant polymérique) | 1,5 | 1,5 | 1,5 | 1,5 | 1,5 | 1,5 |
| Accélérateur type guanidine | 3,7 | 3,7 | 3,7 | 3,7 | 3,7 | 3,7 |
| TOTAL | 177,7 | 177,7 | 177,7 | 177,7 | 177,7 | 177,7 |
| fractions massiques en ingrédients durables | 33,8% | 0% | 33,8% | 22,5% | 11,3% | 28,1% |

Les ingrédients utilisés pour ces compositions identifiés aux tableaux 1 et 2 par le signe * présentaient les caractéristiques suivantes :
- EPDM 1 : taux massiques d'unités issues de l'éthylène de 55 %, d'unités issues d'éthylidène norbornène de 5,5 %, et viscosité Mooney ML(1+4) à 125° C de 80.
- EPDM 2 : taux massiques d'unités issues de l'éthylène de 68 %, d'unités issues d'éthylidène norbornène de 4,9 %, et viscosité Mooney ML(1+4) à 125° C de 85.
- AEM 1 : terpolymère composé d'unités éthylène, méthyl acrylate et d'un site de réticulation et viscosité Mooney ML(1+4) à 100°C de 16,5
- AEM 2 : : terpolymère composé d'unités éthylène, méthyl acrylate et d'un site de réticulation et viscosité Mooney ML(1+4) à 100°C de 18,5
- Noir de carbone vierge (tableau 1, matrice EPDM): de grade 6, surface spécifique BET selon ASTM D 6556 de 20 m²/g, et indice d'adsorption d'iode selon ASTM D 1510 de 20 mg/g.
- Noir de carbone vierge (Tableau 2, matrice AEM) : de série 5, surface spécifique BET selon ASTM D6556 de 40 m²/g, et indice d'adsorption d'iode selon ASTM D 1510 de 43 mg/g.
- lignine : lignine kraft issue d'un bois d'arbres gymnospermes, tels que des conifères, commercialisée par UPM sous la référence TSD020-1000.
- Noir de carbone recyclé : issu de la pyrolyse de pneumatiques usagés et commercialisé par Contée sous la dénomination Conblack^{®}.
- Plastifiant : huile minérale paraffinique.
- Agent mise en oeuvre : mélange de dérivés d'acides gras.

Le tableau 3 ci-après présente les propriétés rhéologiques essentielles des compositions obtenues C1-C3 et I1-I5, comprenant pour chacune d'entre elles :
- la viscosité Mooney ML(1+4) à 100° C, mesurée selon ISO 289-1 ;
- le temps de grillage initial t5 sans réticulation prématurée, à 135° C selon la norme ISO 289-2 ; et
- les propriétés rhéologiques : temps ts1 et t10, t50, t70, t90 (début à fin de réticulation) mesurés par un rhéomètre à matrice oscillante (20 min. à 180° C) selon la norme ISO 6502.

**[Tableau 3]**

| | | C1 | C2 | C3 | **I1** | **I2** | **I3** | **I4** | **I5** |
|---|---|---|---|---|---|---|---|---|---|
| ML(1+4) à 100° C | | 99,3 | 97,2 | 109,8 | 94,3 | 99,6 | 104,1 | 97,5 | 97,3 |
| Temps de grillage t5 en min. (30 min. à 135° C) | | 12,74 | 13,28 | 10,65 | 13,03 | 12,74 | 10,35 | 12,17 | 10,80 |
| Rhéologie : temps en min. (20 min. à 180° C) | ts1 | 0,61 | 0,57 | 0,62 | 0.54 | 0,59 | 0,58 | 0,52 | 0,50 |
| | t10 | 0,64 | 0,66 | 0,67 | 0,60 | 0,64 | 0,63 | 0,58 | 0,57 |
| | t50 | 1,74 | 1,96 | 1,76 | 1,68 | 1,73 | 1,66 | 1,69 | 1,63 |
| | t70 | 2,83 | 3,15 | 2,82 | 2,77 | 2,81 | 2,74 | 2,80 | 2,74 |
| | t90 | 5,4 | 5,87 | 5,3 | 5,37 | 5,34 | 5,35 | 5,48 | 5,37 |

Le tableau 4 ci-après présente les propriétés physiques et mécaniques des compositions réticulées obtenues C1-C3 et I1-I5, mesurées comme indiqué ci-dessus sur des éprouvettes de type haltères.

**[Tableau 4]**

| | C1 | C2 | C3 | **I1** | **I2** | **I3** | **I4** | **I5** |
|---|---|---|---|---|---|---|---|---|
| Masse volumique (g/cm³) | 1,109 | 1,162 | 1,063 | 1,133 | 1,098 | 1,116 | 1,150 | 1,154 |

| **Avant vieillissement thermo-oxydant** | | | | | | | | |
|---|---|---|---|---|---|---|---|---|
| Dureté Shore A | 64 | 65 | 65 | 66 | 65 | 66 | 66 | 66 |
| Contrainte rupture (MPa) | 9,21 | 13,4 | 6,72 | 8,46 | 7,04 | 7,54 | 9,82 | 9,33 |
| Allongement rupture (%) | 323 | 310 | 248 | 302 | 260 | 278 | 260 | 278 |
| Module M100 (MPa) | 3,88 | 3,78 | 3,97 | 3,46 | 3,51 | 3,45 | 3,94 | 3,40 |

| **Après vieillissement thermo-oxydant pendant 168 h à 150° C** | | | | | | | | |
|---|---|---|---|---|---|---|---|---|
| Dureté Shore A | 66 | 71 | 67 | 71 | 68 | 71 | 71 | 74 |
| Δ dureté Shore A | +2 | +6 | +2 | +5 | +3 | +5 | +5 | +8 |
| Contrainte rupture (MPa) | 8,78 | 12 | 7,09 | 7,31 | 6,68 | 6,41 | 8,57 | 7,62 |
| Δ (%) contrainte rupture | -5 % | -10 % | 6 % | -14 % | -5 % | -15 % | -13 % | -18 % |
| Allongement rupture (%) | 195 | 265 | 155 | 138 | 143 | 118 | 161 | 127 |
| Δ (%) allongement rupture | -40 % | -15 % | -38 % | -54 % | -45 % | -58 % | -38 % | -54 % |

| **Déformation rémanente à la compression (DRC)** | | | | | | | | |
|---|---|---|---|---|---|---|---|---|
| 25 % : 72 h/130° C après 30 min. selon ISO 815-1 (méthode B) | 27,4 | 28,4 | 28,7 | 48,3 | 48,5 | 71,2 | 30,1 | 31,5 |
| 25 % : 72 h/140° C « FCA » selon ISO 1817 | 38,9 | 43,0 | 39,1 | 54,0 | 52,7 | 88,2 | 40,1 | 44,2 |

| **Résistivité volumique à 1000 V** | | | | | | | | |
|---|---|---|---|---|---|---|---|---|
| En Ω.cm | 6,4 ×10¹³ | 1,5 ×10⁶ | 4,9 ×10¹³ | 7,2 ×10¹³ | 5,8 ×10¹³ | 6,1 ×10¹³ | 3,2 X1012 | 6,2 ×10¹³ |

L'ensemble des propriétés obtenues aux tableaux 3-4 pour les compositions I1-I5 selon l'invention montrent, en comparaison de la composition témoin C1 (comprenant à titre de charge renforçante un mélange de 50 % du même noir de carbone vierge et de 50 % de la même lignine) :
- à l'état non réticulé, une aptitude à la mise en oeuvre globalement conservée pour les compositions I1-I5 et même améliorée pour I1, I2, I4 et I5 (voir notamment leur viscosité ML(1+4) réduite par rapport à celle de la composition C1) ; et
- à l'état réticulé :
   des propriétés mécaniques globalement conservées (même après vieillissement thermo-oxydant) pour les compositions I1, I4 et I5, voire en partie améliorées pour la composition I4 (voir notamment la contrainte à la rupture et le module M100 avant vieillissement de la composition I4 qui sont augmentés par rapport à ceux de la composition C1, ainsi que les DRC de la composition I4 qui sont du même ordre que celles de la composition C1), et
   une résistivité globalement conservée pour les compositions I1-I5, voire améliorée pour la composition I1.

Les propriétés obtenues pour les compositions I1-I5 selon l'invention montrent, en comparaison de la composition C2 non conforme à l'invention (comprenant à titre de charge renforçante 100 % du même noir de carbone vierge) :
- à l'état non réticulé, une aptitude à la mise en oeuvre globalement conservée pour les compositions I1-I5 et même améliorée pour I1 (voir notamment sa viscosité ML(1+4) réduite par rapport à celle de la composition C2) ; et
- à l'état réticulé :
   des propriétés mécaniques point trop pénalisées (même après vieillissement thermo-oxydant) pour les compositions I1, I4 et I5, voire en partie améliorées pour la composition I4 (voir notamment le module M100 de la composition I4 qui est augmenté par rapport à celui de la composition C2, ainsi que les DRC des compositions I4 et I5 qui sont du même ordre que celles de la composition C2, voire réduites pour la composition I4 à 72 h / 140° C), et
   une résistivité très nettement améliorée pour les compositions 11-15.

Les propriétés obtenues pour les compositions I1-I5 selon l'invention montrent, en comparaison de la composition C3 non conforme à l'invention (comprenant à titre de charge renforçante 100 % de la même lignine) :
- à l'état non réticulé, une aptitude à la mise en oeuvre très nettement améliorée pour les compositions 11-15 (voir notamment leurs viscosités ML(1+4) très réduites par rapport à celle de la composition C3 et leurs temps de grillage t5 globalement supérieurs par rapport à ceux de la composition C3) ; et
- à l'état réticulé :
   des propriétés mécaniques globalement améliorées même après vieillissement thermo-oxydant pour les compositions I1-I5 (voir notamment les contraintes et allongements à la rupture, ainsi que les DRC des compositions I4 et I5 qui sont du même ordre que celles de la composition C3), et
   une résistivité améliorée pour les compositions I1, I2, I3 et I5.

Le tableau 5 ci-après présente les propriétés rhéologiques essentielles des compositions obtenues C4-C6 et I6-I8, comprenant pour chacune d'entre elles :
- la viscosité Mooney ML(1+4) à 100° C, mesurée selon ISO 289-1 ;
- le temps de grillage initial t5 sans réticulation prématurée, à 135° C selon la norme ISO 289-2 ; et
- les propriétés rhéologiques : temps ts1 et t10, t50, t70, t90 (début à fin de réticulation) mesurés par un rhéomètre à matrice oscillante (20 min. à 180° C) selon la norme ISO 6502.

**[Tableau 5]**

| | | C4 | C5 | C6 | **I6** | **I7** | **I8** |
|---|---|---|---|---|---|---|---|
| ML(1+4) à 100° C | | 45,4 | 45,8 | 45,5 | 45,1 | 44,3 | 47,9 |
| Temps de grillage t5 en min. (30 min. à 135° C) | | 8,74 | 5,61 | 6,37 | 6,59 | 5,63 | 6,74 |
| Rhéologie : temps en min. (20 min. à 180° C) | ts1 | 4,51 | 1,26 | 1,28 | 1,76 | 1,32 | 1,63 |
| | t10 | 1,03 | 1,04 | 0,92 | 0,98 | 0,88 | 1 |
| | t50 | 3,4 | 3,19 | 2,94 | 3,16 | 2,88 | 3,15 |
| | t70 | 5,92 | 5,03 | 4,99 | 5,28 | 4,76 | 5,27 |
| | t90 | 11,6 | 9,66 | 10,61 | 10,76 | 9,94 | 10,66 |

Le tableau 6 ci-après présente les propriétés physiques et mécaniques des compositions réticulées obtenues C4-C6 et I6-I8, mesurées comme indiqué ci-dessus sur des éprouvettes de type haltères.

**[Tableau 6]**

| | C4 | C5 | C6 | **I6** | **I7** | **I8** |
|---|---|---|---|---|---|---|
| Masse volumique (g/cm³) | 1,132 | 1,229 | 1,235 | 1,199 | 1,215 | 1,216 |

| **Avant vieillissement thermo-oxydant** | | | | | | |
|---|---|---|---|---|---|---|
| Dureté Shore A | 52 | 68 | 57 | 56 | 61 | 54 |
| Contrainte rupture (MPa) | 6,44 | 15,4 | 12,3 | 10,3 | 11,8 | 10,4 |
| Allongement rupture (%) | 307 | 323 | 349 | 302 | 338 | 340 |
| Module M100 (MPa) | 2,57 | 5,03 | 3,27 | 3,33 | 3,63 | 3,13 |

| **Après vieillissement thermo-oxydant pendant 168 h à 150° C** | | | | | | |
|---|---|---|---|---|---|---|
| Dureté Shore A | 53 | 73 | 69 | 74 | 78 | 69 |
| Δ dureté Shore A | 2 | 4 | 12 | 18 | 17 | 15 |
| Contrainte rupture (MPa) | 6,8 | 13,3 | 5,7 | 8,0 | 10,5 | 8,2 |
| Δ (%) contrainte rupture | 5% | -14% | -54% | -23% | -11% | -21% |
| Allongement rupture (%) | 211 | 282 | 107 | 135 | 202 | 156 |
| Δ (%) allongement rupture | -31% | -13% | -69% | -55% | -40% | -54% |

| **Déformation rémanente à la compression (DRC)** | | | | | | |
|---|---|---|---|---|---|---|
| 25 % : 72 h/130° C après 30 min. selon ISO 815-1 (méthode B) | 55,1 | 16,1 | 28,6 | 28,7 | 15,1 | 26,7 |
| 25 % : 72 h/140° C « FCA » selon ISO 1817 | 93,7 | 69 | 68 | 72,9 | 71,6 | 70,9 |

| **Résistivité volumique à 1000 V** | | | | | | |
|---|---|---|---|---|---|---|
| En Ω.cm | 1,68.10¹⁴ | 5,6.10⁵ | 1,68.10¹⁴ | 1,68.10¹⁴ | 5,2.10⁸ | 1,6.10¹⁴ |

Les propriétés obtenues pour les compositions I6-I8 selon l'invention montrent, en comparaison des compositions C4-C6 non conformes à l'invention:
- à l'état non réticulé, une aptitude à la mise en oeuvre globalement conservée pour les compositions I6-I8; et
- à l'état réticulé :
   des propriétés mécaniques point trop pénalisées (même après vieillissement thermo-oxydant) pour les compositions I6-I8, (voir notamment la contrainte à la rupture qui reste supérieur à 7MPa, et l'allongement à la rupture qui reste supérieur à 100% après vieillissement thermo-oxydant pendant 168 h à 150° C), et
   une résistivité très nettement améliorée pour les compositions I6-I8 par rapport à la composition C5 comprenant uniquement du noir de carbone vierge.

En conclusion, ces exemples montrent que :
- les compositions 11-18 selon l'invention, notamment caractérisées par le couplage d'un noir de carbone recyclé à de la lignine, présentent globalement des propriétés à l'état non réticulé et réticulé globalement du même ordre que les compositions C1-C3, et en particulier que
- les compositions I1, I2, I4, I5, I6, I7 et I8 caractérisées en outre par l'ajout d'un noir de carbone vierge au noir de carbone recyclé et à la lignine, permettent même d'améliorer encore certaines de ces propriétés par rapport à celles des compositions C1-C6, avec encore plus particulièrement
- les compositions I4 et I5, spécifiquement caractérisées en outre par une fraction massique de lignine dans la charge renforçante de 17 % environ, permettent d'améliorer encore certaines de ces propriétés par rapport aux compositions C1-C3 (en comparaison des compositions I1 et I2 dont la charge renforçante comprend 33 % et 67 % de lignine environ, respectivement).

Ces exemples montrent également que les compositions selon l'invention I1, I2, I3, I5, I6, I7 et I8 présentent avantageusement une fraction massique d'ingrédients durables (i.e. biosourcé et recyclé) qui est supérieure à 10% (composition I7), supérieure à 20% (composition I6) supérieure à 25 % (composition I8), voire supérieure à 30 % (compositions I2, I3 et I5) et même supérieure à 40 % (composition I3).

Ces exemples montrent également que le remplacement d'au moins une partie du noir de carbone vierge par du noir de carbone recyclé permet d'améliorer la résistivité de la composition.

## Revendications

1. Composition de caoutchouc pour tuyau, à base d'au moins un élastomère, la composition comprenant une charge renforçante et un système de réticulation comprenant, de préférence, du soufre et/ou un peroxyde, dans laquelle la charge renforçante comprend
(i) un mélange pulvérulent recyclé qui comprend le produit d'une réaction de décomposition thermique, par thermolyse, pyrolyse ou dévulcanisation, appliquée à un broyat d'articles usagés à base de caoutchouc,
le mélange pulvérulent recyclé comprenant :
au moins un noir de carbone recyclé selon une fraction massique comprise entre 80 % et 99 %, et
des substances inorganiques selon une fraction massique comprise entre 1 % et 20 % comprenant des oxydes de silicium et/ou des composés de zinc , et
(ii) une lignine fonctionnalisée sous forme de poudre.

2. Composition de caoutchouc selon la revendication 1, dans laquelle ledit au moins un noir de carbone recyclé présente des propriétés de renforcement de la composition analogues à celles d'un noir de carbone renforçant choisi parmi les séries ASTM N300, N400, N500, N600 et N700, par exemple analogues à celles d'un noir de carbone de série N500 ou N600.

3. Composition de caoutchouc selon une des revendications précédentes, dans laquelle le mélange pulvérulent recyclé est micronisé et comprend le produit d'une réaction de thermolyse ou pyrolyse appliquée audit broyat.

4. Composition de caoutchouc selon la revendication 3, dans laquelle le mélange pulvérulent recyclé est issu de la pyrolyse de pneumatiques usagés.

5. Composition de caoutchouc selon une des revendications précédentes, dans laquelle la lignine fonctionnalisée sous forme de poudre :
- comprend des particules dépourvues de groupe CO ou COO en surface, et/ou
- est une lignine kraft par exemple issue d'un bois d'arbres gymnospermes, tels que des conifères.

6. Composition de caoutchouc selon une des revendications précédentes, dans laquelle la charge renforçante comprend en outre au moins un noir de carbone vierge, présentant par exemple une surface spécifique BET mesurée selon la norme ASTM D 6556 qui est comprise entre 10 et 50 m²/g.

7. Composition de caoutchouc selon une des revendications précédentes, dans laquelle la composition comprend 10-120 pce dudit au moins un noir de carbone recyclé et 2-90 pce de la lignine fonctionnalisée (pce : parties en poids pour 100 parties d'élastomère(s)).

8. Composition de caoutchouc selon une des revendications précédentes, dans laquelle ledit au moins un élastomère est choisi parmi les terpolymères éthylène-propylène-diène (EPDM), les copolymères isobutylène-isoprène (IIR), les copolymères isobutylène-isoprène halogénés (XIIR), les caoutchoucs silicones, les caoutchouc silicones fluorés, les caoutchoucs acryliques de type polyacrylates (ACM) et polyacrylates d'éthylène (AEM), et les copolymères bromés d'isobutylène-para-méthylstyrène.

9. Composition de caoutchouc selon les revendications 7 et 8, dans laquelle :
- ledit au moins un élastomère est constitué d'au moins un EPDM,
- le système de réticulation comprend un peroxyde ou du soufre, et
- la composition comprend 15-100 pce dudit au moins un noir de carbone recyclé et 5-80 pce de la lignine fonctionnalisée.

10. Composition de caoutchouc selon les revendications 6 et 9, dans laquelle la composition comprend :
- 10-80 pce dudit au moins un noir de carbone vierge, présentant par exemple une surface spécifique BET mesurée selon la norme ASTM D 6556 qui est comprise entre 10 et 50 m²/g,
- 10-80 pce dudit au moins un noir de carbone recyclé, et
- 15-80 pce de ladite lignine fonctionnalisée,
avec la somme des quantités dudit au moins un noir de carbone vierge et dudit au moins un noir de carbone recyclé dans la composition qui est de 60-110 pce.

11. Composition de caoutchouc selon la revendication 10, dans laquelle la somme des quantités dudit au moins un noir de carbone vierge et dudit au moins un noir de carbone recyclé dans la composition est de 70-100 pce,
et dans laquelle la somme des quantités dudit au moins un noir de carbone vierge, dudit au moins un noir de carbone recyclé et de ladite lignine fonctionnalisée dans la composition est de 100-130 pce.

12. Composition de caoutchouc selon la revendication 10 ou 11, dans laquelle la charge renforçante comprend :
- la lignine fonctionnalisée selon une fraction massique de 15-30 %, et
- ledit au moins un noir de carbone vierge et ledit au moins un noir de carbone recyclé selon une fraction massique totale de noir de carbone de 70-85 %.

13. Composition de caoutchouc selon une des revendications 9 à 12, dans laquelle la composition présente à l'état réticulé une résistivité volumique supérieure à 10⁶ Ohm.cm, de préférence supérieure à 10⁸ Ohm.cm, mesurée selon la norme IEC 62631 3.

14. Composition de caoutchouc selon une des revendications précédentes, dans laquelle la composition présente une fraction massique d'ingrédients durables, lesquels incluent ledit au moins un noir de carbone recyclé et ladite lignine fonctionnalisée, qui est supérieure à 25 %, de préférence supérieure à 30 %, par exemple égale ou supérieure à 40 %.

15. Tuyau de transfert d'un fluide liquide, gazeux ou supercritique pour moteur thermique, électrique ou pour une pile à combustible d'un véhicule automobile, ferroviaire, aquatique, aérien ou spatial, le tuyau comprenant un tube radialement interne, au moins une couche de renforcement et une couche de couverture, le tuyau étant adapté pour véhiculer le fluide à une pression égale ou supérieure à 2. 10⁵ Pa,
dans lequel l'un au moins du tube interne et de la couche de couverture est constitué d'une composition de caoutchouc à l'état réticulé selon une des revendications précédentes.
